# EUROPEAN PATENT APPLICATION

(11) **EP 3 829 207 A1**
(43) Date of publication of application: **02.06.2021**
(21) Application number: 18929978.7
(22) Date of filing: 16.08.2018
(51) Int. Cl.: H04W 16/28

(54) **DOWNLINK SIGNAL TRANSMISSION METHOD, TERMINAL, AND COMPUTER-READABLE STORAGE MEDIUM**

(71) Applicant: GUANGDONG OPPO MOBILE TELECOMMUNICATIONS CORP., LTD., Dongguan Guangdong 523860 (CN)
(72) Inventor: CHEN, Wenhong, Dongguan, Guangdong 523860 (CN); SHI, Zhihua, Dongguan, Guangdong 523860 (CN)
(74) Representative: Manitz Finsterwald Patent- und Rechtsanwaltspartnerschaft mbB
(86) International application number: PCT/CN2018/100873
(87) International publication number: WO 2020/034161

(57) **Abstract**

Disclosed in the embodiments of the present application are a downlink signal transmission method, a terminal, and a computer-readable storage medium. The method comprises: when downlink signal or transmission configuration indicator (TCI) states respectively associated with two downlink signals to be transmitted meet a preset condition, a terminal receives the two downlink signals over the same time-domain resource.

## Description

### TECHNICAL FIELD

The disclosure relates to the technical field of wireless communications, and particularly to a method for downlink signal transmission, a terminal, and a computer-readable storage medium.

### BACKGROUND

In a new radio (NR) system, if a network device has only one transmission/reception point (TRP) or one antenna array block (i.e., panel), two downlink signals may be simultaneously transmitted to a terminal through the same beam only. If there are multiple TRPs or multiple panels on a network side, the two downlink signals may be simultaneously transmitted to the terminal through different beams. However, in a present system, the terminal cannot simultaneously receive two downlink signals transmitted through different beams from different TRPs/panels.

### SUMMARY

Embodiments of the disclosure provide a method for downlink signal transmission, a terminal, and a computer-readable storage medium.

According to a first aspect, the embodiments of the disclosure provide a method for downlink signal transmission, which includes that: when downlink signals or transmission configuration indicator (TCI) states respectively associated with two downlink signals to be transmitted satisfy a preset condition, a terminal receives the two downlink signals on a same time-domain resource.

According to a second aspect, the embodiments of the disclosure also provide a terminal, which may include a communication unit, configured to, when downlink signals or TCI states respectively associated with two downlink signals to be transmitted satisfy a preset condition, receive the two downlink signals on a same time-domain resource.

According to a third aspect, the embodiments of the disclosure also provide a terminal, which may include a processor and a memory. The memory may be configured to store a computer program. The processor may be configured to call and run the computer program stored in the memory to perform the method for downlink signal transmission of the first aspect of the embodiments of the disclosure.

According to a fourth aspect, the embodiments of the disclosure also provide a chip, which may include a processor, configured to call and run a computer program from a memory to enable a device installed with the chip to perform the method for downlink signal transmission of the first aspect of the embodiments of the disclosure.

According to a fifth aspect, the embodiments of the disclosure also provide a computer-readable storage medium, which may be configured to store a computer program, the computer program enabling a computer to perform the method for downlink signal transmission of the first aspect of the embodiments of the disclosure.

According to a sixth aspect, the embodiments of the disclosure also provide a computer program, which may enable a computer to execute the method for downlink signal transmission of the first aspect of the embodiments of the disclosure.

Through the technical solutions, when the downlink signals or TCI states respectively associated with the two downlink signals to be transmitted satisfy the preset condition, namely the two downlink signals are from different TRPs/panels, the terminal may simultaneously receive the two downlink signals on the same time-domain resource, so that simultaneous transmission of two downlink signals (or multiple downlink signals) from different TRPs/panels on the same time-domain resource is implemented, no matter whether the same beam is adopted for the two downlink signals or not.

### BRIEF DESCRIPTION OF THE DRAWINGS

FIG. 1 is a schematic architecture diagram of a communication system according to an embodiment of the disclosure.
FIG. 2 is a first flowchart of a method for downlink signal transmission according to an embodiment of the disclosure.
FIG. 3 is a second flowchart of a method for downlink signal transmission according to an embodiment of the disclosure.
FIG. 4 is a third flowchart of a method for downlink signal transmission according to an embodiment of the disclosure.
FIG. 5 is a first composition structure diagram of a terminal according to an embodiment of the disclosure.
FIG. 6 is a second composition structure diagram of a terminal according to an embodiment of the disclosure.
FIG. 7 is a third composition structure diagram of a terminal according to an embodiment of the disclosure.
FIG. 8 is a schematic diagram of a hardware composition structure of a terminal according to an embodiment of the disclosure.
FIG. 9 is a schematic structure diagram of a chip according to an embodiment of the disclosure.

### DETAILED DESCRIPTION

The technical solutions in the embodiments of the disclosure will be described below in combination with the drawings in the embodiments of the disclosure. It is apparent that the described embodiments are not all embodiments but part of embodiments of the disclosure. All other embodiments obtained by those of ordinary skill in the art based on the embodiments in the disclosure without creative work shall fall within the scope of protection of the disclosure.

The technical solutions of the embodiments of the disclosure may be applied to various communication systems, for example, a global system of mobile communication (GSM), a code division multiple access (CDMA) system, a wideband code division multiple access (WCDMA) system, a general packet radio service (GPRS), a long term evolution (LTE) system, an lte frequency division duplex (FDD) system, LTE time division duplex (TDD), a universal mobile telecommunication system (UMTS), a worldwide interoperability for microwave access (WiMAX) communication system or a future 5th-Generation (5G) system.

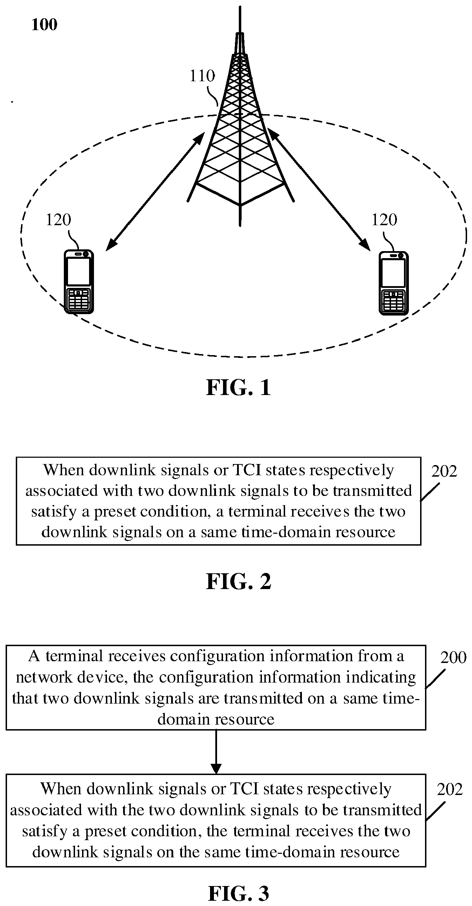

Exemplarily, a communication system 100 that the embodiments of the disclosure are applied to is illustrated in FIG. 1. The communication system 100 may include a network device 110, and the network device 110 may be a device that communicates with a terminal 120 (or called a communication terminal). The network device 110 may provide a communication coverage for a specific geographical region and may communicate with a terminal device located in the coverage. Optionally, the network device 110 may be a base transceiver station (BTS) in the GSM or the CDMA system, may also be a NodeB (NB) in the WCDMA system, and may further be an evolutional Node B (eNB or eNodeB) in the LTE system or a wireless controller in a cloud radio access network (CRAN). Or the network device may be a mobile switching center, a relay station, an access point, a vehicle device, a wearable device, a hub, a switch, a network bridge, a router, a network-side device in a future 5G network, a network device in a future evolved public land mobile network (PLMN) or the like.

The communication system 100 further includes at least one terminal 120 located within the coverage of the network device 110. The "terminal" used herein includes, but is not limited to, a device configured to receive/send a communication signal through a wired line connection, for example, through public switched telephone network (PSTN), digital subscriber line (DSL), digital cable and direct cable connections, and/or another data connection/network, and/or through a wireless interface, for example, for a cellular network, a wireless local area network (WLAN), a digital television network like a digital video broadcasting-handheld (DVB-H) network, a satellite network and an amplitude modulated (AM)-frequency modulated (FM) broadcast transmitter, and/or another terminal, and/or an Internet of Things (IoT) device. The terminal configured to communicate through a wireless interface may be called a "wireless communication terminal", a "wireless terminal" or a "mobile terminal." Examples of the mobile terminal include, but are not limited to, a satellite or cellular telephone, a personal communication system (PCS) terminal capable of combining a cellular radio telephone and data processing, faxing and data communication capabilities, a personal digital assistant (PDA) capable of including a radio telephone, a pager, Internet/intranet access, a Web browser, a notepad, a calendar and/or a global positioning system (GPS) receiver, and a conventional laptop and/or palmtop receiver or another electronic device including a radio telephone transceiver. The terminal may refer to an access terminal, user equipment (UE), a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a session initiation protocol (SIP) phone, a wireless local loop (WLL) station, a PDA, a handheld device with a wireless communication function, a computing device, another processing device connected to a wireless modem, a vehicle device, a wearable device, a terminal device in the 5G network, a terminal device in the future evolved PLMN or the like.

Optionally, device to device (D2D) communication may be performed between the terminals 120.

Optionally, the 5G system or the 5G network may also be called an NR system or an NR network.

A network device and two terminals are exemplarily illustrated in FIG. 1. Optionally, the communication system 100 may include multiple network devices and another number of terminals may be included in coverage of each network device. There are no limits made thereto in the embodiments of the disclosure.

Optionally, the communication system 100 may further include other network entities such as a network controller and a mobility management entity. No limits are made thereto in the embodiments of the disclosure.

It is to be understood that terms "system" and "network" in the disclosure may usually be used interchangeably in the disclosure. In the disclosure, term "and/or" is only an association for describing associated objects and represents that three relationships may exist. For example, A and/or B may represent three situations: i.e., independent existence of A, existence of both A and B, and independent existence of B. In addition, character "/" in the disclosure usually represents that previous and next associated objects form an "or" relationship.

The embodiments of the disclosure provide a method for downlink signal transmission. FIG. 2 is a first flowchart of a method for downlink signal transmission according to an embodiment of the disclosure. As illustrated in FIG. 2, the method includes the following step.

In 202, when downlink signals or TCI states respectively associated with two downlink signals to be transmitted satisfy a preset condition, a terminal receives the two downlink signals on a same time-domain resource.

In the embodiment of the disclosure, each of the two downlink signals may be one of the following: a synchronization signal block (SSB), a physical broadcast channel demodulation reference signal (PBCH DMRS), a phase tracking reference signal (PTRS), a physical downlink control channel (PDCCH), a physical downlink control channel demodulation reference signal (PDCCH DMRS), a physical downlink shared channel (PDSCH), a physical downlink shared channel demodulation reference signal (PDSCH DMRS), or a channel state information-reference signal (CSI-RS). Types of different downlink signals in the two downlink signals to be transmitted may be different. For example, one is an SSB and the other is a CSI-RS.

In the embodiment, the downlink signals or TCI states respectively associated with the two downlink signals to be transmitted may indicate whether the two downlink signals are from different TRPs/panels or not. When it is indicated that the two downlink signals are from different TRPs/panels, the terminal receives the two downlink signals on the same time-domain resource.

In an embodiment of the disclosure, before the operation that the terminal receives the two downlink signals on the same time-domain resource, the method further includes that: the terminal determines a respective one of the downlink signals associated with each of the two downlink signals based on the TCI state associated with the downlink signal to be transmitted.

In the embodiment of the disclosure, a respective one of the downlink signals associated with each of the two downlink signals is one of the following: an SSB, a PTRS, or a CSI-RS. The downlink signals respectively associated with the two downlink signals may be the same type of downlink signals, or may be different types of downlink signals. The downlink signal or TCI state associated with each of the two downlink signals is configured by a network device.

That the downlink signals respectively associated with the two downlink signals to be transmitted satisfy the preset condition or the TCI states satisfy the preset condition will be described based on the types of the downlink signals respectively associated with the two downlink signals in combination with specific implementation manners of downlink signal transmission of the terminal.

As a first implementation, when the downlink signals respectively associated with the two downlink signals are both PTRSs, that the downlink signals respectively associated with the two downlink signals to be transmitted satisfy the preset condition includes that: ports of the PTRSs respectively associated with the two downlink signals are different; or, ports of the PTRSs respectively associated with the two downlink signals are the same, and the two downlink signals are quasi co-located (QCL) with respect to a spatial receiver parameter (i.e., a spatial Rx parameter).

As an implementation manner, the ports of the PTRSs respectively associated with the two downlink signals are different. In this application scenario, it is indicated that the two downlink signals are from different TRPs or panels. In this case, the terminal may simultaneously receive the two downlink signals through one or two panels. As another implementation manner, the ports of the PTRSs respectively associated with the two downlink signals are the same, and the two downlink signals are quasi co-located with respect to a spatial receiver parameter. In this application scenario, it is indicated that the two downlink signals are from the same TRP or panel and are sent throguh the same beam, and in such case, the terminal may receive the two downlink signals through the same receiving beam respectively. QCL with respect to spatial Rx parameter is also called QCL based on QCL-TypeD.

In other application scenarios except the two implementation manners, that is, the ports of the PTRSs respectively associated with the two downlink signals are the same, and the two downlink signals are not quasi co-located with respect to spatial Rx parameters, the terminal does not simultaneously receive the two downlink signals on the same time-domain resource, the terminal receives only one of the two downlink signals; or, the terminal may simultaneously receive the two downlink signals by use of a receiving beam configured to receive one of the two downlink signals, but one of the two signals is unlikely to be received; or, the terminal does not receive the two downlink signals and processes the present event as an error event (i.e., an error case).

In the above implementation, the terminal determines a port of a respective one of the PTRSs associated with each of the two downlink signals based on the TCI state associated with the downlink signal to be transmitted. As an example, each TCI state may include indication information of the port of one PTRS.

As a second implementation, when the downlink signals respectively associated with the two downlink signals are both CSI-RSs, that the downlink signals respectively associated with the two downlink signals to be transmitted satisfy the preset condition includes that: CSI-RS resources for the CSI-RSs respectively associated with the two downlink signals belong to different CSI-RS resource sets; or, CSI-RS resources for the CSI-RSs respectively associated with the two downlink signals belong to the same CSI-RS resource set, and the two downlink signals are quasi co-located with respect to spatial Rx parameters; or, CSI-RS resources for the CSI-RSs respectively associated with the two downlink signals are the same.

As a first implementation manner, the CSI-RS resources for the CSI-RSs respectively associated with the two downlink signals belong to different CSI-RS resource sets. In this application scenario, it is indicated that the two downlink signals are from different TRPs or panels, and in such case, the terminal may receive the two downlink signals through one or two panels respectively. As another implementation manner, the CSI-RS resources for the CSI-RSs respectively associated with the two downlink signals belong to the same CSI-RS resource set, and the two downlink signals are quasi co-located based on spatial Rx parameters; or, the CSI-RSs respectively associated with the two downlink signals are the same. In this application scenario, it is indicated that the two downlink signals are from the same TRP or panel and are sent by use of the same beam, and in such case, the terminal may receive the two downlink signals through the same receiving beam respectively. The quasi co-location with respect to a spatial Rx parameter is also referred to as a quasi co-location based on QCL-TypeD.

In other application scenarios except the two implementation manners, that is, the CSI-RS resources for the CSI-RSs respectively associated with the two downlink signals belong to the same CSI-RS resource set, when the two downlink signals are not quasi co-located with respect to the spatial Rx parameter or the CSI-RSs respectively associated with the two downlink signals are different, the terminal does not simultaneously receive the two downlink signals on the same time-domain resource, the terminal receives only one of the two downlink signals; or, the terminal may simultaneously receive the two downlink signals by use of the receiving beam configured to receive one of the two downlink signals but one signal in the two signals is unlikely to receive; or, the terminal does not receive the two downlink signals and processes the present event as an error event (i.e., an error case).

In the implementation, different CSI-RS resources in the CSI-RS resource set are transmitted by the network device through different sending beams. The CSI-RS resource is not used for time-frequency tracking, but is used for channel measurement or beam management or radio resource management (RRM) measurement.

In the implementation, the terminal determines a respective one of the CSI-RSs associated with each of the two downlink signals based on the TCI state associated with the downlink signal to be transmitted. As an example, each TCI state may include indication information of one CSI-RS resource.

As a third implementation, when the downlink signals respectively associated with the two downlink signals are both SSBs, that the downlink signals respectively associated with the two downlink signals to be transmitted satisfy the preset condition includes that: the SSBs respectively associated with the two downlink signals contain different cell information; or, the SSBs respectively associated with the two downlink signals contain the same cell information and indexes of the SSBs respectively associated with the two downlink signals are the same.

As an implementation manner, the SSBs associated with the two downlink signals respectively contain different cell information. In this application scenario, it is indicated that the two SSBs are from different cells or TRPs, and in such case, the terminal may receive the two downlink signals respectively. As another implementation manner, the indexes of the SSBs respectively associated with the two downlink signals are the same. In this application scenario, it is indicated that the two downlink signals are transmitted by use of the same beam, and in such case, the terminal may receive the two downlink signals through the same receiving beam respectively.

In other application scenarios except the two implementation manners, that is, the SSBs respectively associated with the two downlink signals contain the same cell information and the indexes of the SSBs respectively associated with the two downlink signals are different, it is indicated that the two downlink signals are sent using different beams, and in such case, the terminal does not simultaneously receive the two downlink signals on the same time-domain resource, the terminal receives only one of the two downlink signals; or, the terminal may simultaneously receive the two downlink signals by use of the receiving beam configured to receive one of the two downlink signals but one of the two signals is unlikely to receive; or, the terminal does not receive the two downlink signals and processes the present event as an error event (i.e., an error case).

In the implementation, the cell information may specifically be a cell Identifier (ID) or cell common system information.

In the implementation, the terminal determines an index of a respective one of the SSBs associated with each of the two downlink signals based on the TCI state associated with the downlink signal to be transmitted. As an example, each TCI state may include indication information of the index of one SSB.

As a fourth implementation, when a downlink signal associated with a first downlink signal in the two downlink signals is a CSI-RS and a downlink signal associated with a second downlink signal is an SSB, that the downlink signals respectively associated with the two downlink signals to be transmitted satisfy the preset condition includes that: the CSI-RS and the SSB are quasi co-located with respect to a spatial receiver parameter.

As an implementation manner, the CSI-RS and the SSB are quasi co-located with respect to the spatial Rx parameter. In this application scenario, it is indicated that the two downlink signals are transmitted using the same beam, and in such case, the terminal may receive the two downlink signals through the same receiving beam respectively.

In other implementation manners, that is, the CSI-RS and the SSB are not quasi co-located with respect to the spatial Rx parameter, the terminal does not simultaneously receive the two downlink signals on the same time-domain resource, the terminal receives only one of the two downlink signals; or, the terminal may simultaneously receive the two downlink signals using the receiving beam configured to receive one of the two downlink signals, but one of the two signals is unlikely to receive; or, the terminal does not receive the two downlink signals and processes the present event as an error event (i.e., an error case).

In the implementation, quasi co-location with respect to the spatial Rx parameter is also called quasi co-location based on QCL-TypeD.

In the implementation, the terminal determines a respective one of the downlink signals associated with each of the two downlink signals based on the TCI state associated with the downlink signal to be transmitted. As an example, each TCI state may include indication information of one downlink signal.

As a fifth implementation, that the TCI states satisfy the preset condition includes that: the TCI states respectively associated with the two downlink signals belong to different TCI state groups; or, the TCI states respectively associated with the two downlink signals are the same.

As an implementation manner, the TCI states respectively associated with the two downlink signals belong to different TCI state groups. In this application scenario, it is indicated that the two downlink signals are from different TRPs or panels, and in such case, the terminal may receive the two downlink signals through one or two panels respectively. As another implementation manner, the TCI states respectively associated with the two downlink signals are the same, which indicates that the two downlink signals are sent using the same beam, and in this application scenario, the terminal may receive the two downlink signals through the same receiving beam respectively.

In other application scenarios except the two implementation manners, that is, the TCI states respectively associated with the two downlink signals belong to the same TCI state group and the TCI states respectively associated with the two downlink signals are different, the terminal does not simultaneously receive the two downlink signals on the same time-domain resource, the terminal receives only one of the two downlink signals, or, the terminal may simultaneously receive the two downlink signals through the receiving beam configured to receive one of the two downlink signals but one signal in the two signals is unlikely to receive, or, the terminal does not receive the two downlink signals and processes the present case as an error case.

In the implementation, the method further includes that: the terminal determines a group to which a TCI state belongs according to a configuration of the network device. As an example, the terminal may obtain, through radio resource control (RRC) signaling, the TCI state group that is configured by the network device and to which each TCI state belongs; or, the terminal receives TCI states in each TCI state group configured by the network device.

Through the technical solution, when the downlink signals or TCI states respectively associated with the two downlink signals to be transmitted satisfy the preset condition, namely the two downlink signals are from different TRPs/panels, the terminal may simultaneously receive the two downlink signals on the same time-domain resource, so that simultaneous transmission of two downlink signals (or multiple downlink signals) from different TRPs/panels on the same time-domain resource is implemented, no matter whether the same beam is adopted for the two downlink signals or not.

The embodiments of the disclosure also provide a method for downlink signal transmission. FIG. 3 is a second flowchart of a method for downlink signal transmission according to an embodiment of the disclosure. As illustrated in FIG. 3, based on the abovementioned embodiment, before step 202 is performed, the method further includes the following step.

In 200, the terminal receives configuration information from a network device, the configuration information indicating that two downlink signals are transmitted on a same time-domain resource.

As an implementation manner, that the configuration information indicates that the two downlink signals are transmitted on the same time-domain resource includes that: the configuration information indicates that physical resources corresponding to the two downlink signals overlap in a time domain.

That the physical resources corresponding to the two downlink signals overlap in the time domain includes that: a same orthogonal frequency division multiplexing (OFDM) symbol or a same slot is configured for the two downlink signals.

Herein, different frequency-domain resources on the same time-domain resource are occupied by the two downlink signals, namely frequency division multiplexing (FDM) is adopted.

Through the technical solution, when the downlink signals or TCI states respectively associated with the two downlink signals to be transmitted satisfy the preset condition, namely the two downlink signals are from different TRPs/panels, the terminal may simultaneously receive the two downlink signals on the same time-domain resource, so that simultaneous transmission of two downlink signals (or multiple downlink signals) from different TRPs/panels on the same time-domain resource is implemented, no matter whether the same beam is adopted for the two downlink signals or not.

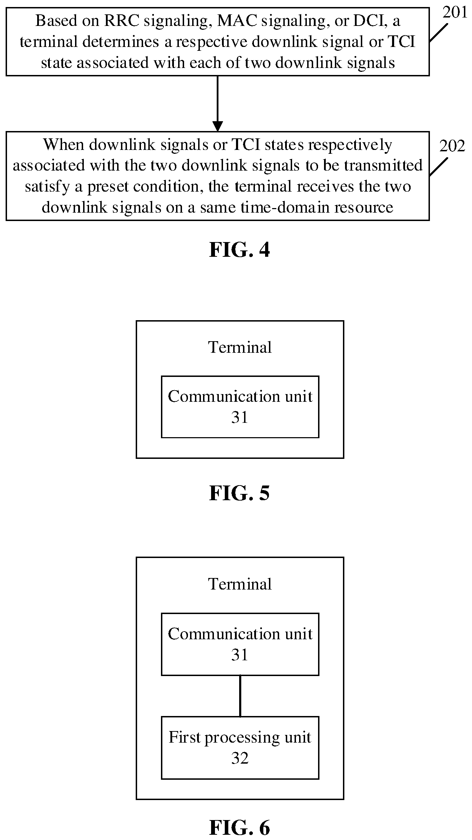

The embodiments of the disclosure also provide a method for downlink signal transmission. FIG. 4 is a third flowchart of a method for downlink signal transmission according to an embodiment of the disclosure. As illustrated in FIG. 4, based on the abovementioned embodiments, before step 202 is performed, the method further includes the following step.

In 201, based on RRC signaling, media access control (MAC) signaling or downlink control information (DCI), the terminal determines a respective one of downlink signals associated with each of the two downlink signals or determines a respective one of the TCI states associated with each of the two downlink signals.

As an implementation manner, if a third downlink signal in the two downlink signals is a periodic signal, a downlink signal or TCI state associated with the third downlink signal may be indicated through the RRC signaling, the third downlink signal being any one of the two downlink signals.

As another implementation manner, if a fourth downlink signal in the two downlink signals is a quasi-persistent signal, a downlink signal or TCI state associated with the fourth downlink signal may be indicated through the MAC signaling, the fourth downlink signal being any one of the two downlink signals.

As another implementation manner, if a fifth downlink signal in the two downlink signals is an aperiodic signal, a downlink signal or TCI state associated with the fifth downlink signal may be indicated through the DCI, the fifth downlink signal being any downlink signal in the two downlink signals.

In the embodiments of the disclosure, before the operation that the terminal receives the two downlink signals on the same time-domain resource, the method further includes that: the terminal sends capability information to the network device, the capability information indicating that the terminal is configured with at least two panels.

In another implementation, if the capability information sent to the network device by the terminal indicates that the terminal is configured with only one panel or TRP, judgment in step 202 is not required.

Through the technical solution, when the downlink signals or TCI states respectively associated with the two downlink signals to be transmitted satisfy the preset condition, namely the two downlink signals are from different TRPs/panels, the terminal may simultaneously receive the two downlink signals on the same time-domain resource, so that simultaneous transmission of two downlink signals (or multiple downlink signals) from different TRPs/panels on the same time-domain resource is implemented, no matter whether the same beam is adopted for the two downlink signals or not.

The embodiments of the disclosure also provide a terminal. FIG. 5 is a first composition structure diagram of a terminal according to an embodiment of the disclosure. As illustrated in FIG. 5, the terminal includes a communication unit 31. The communication unit 31 is configured to, when downlink signals or TCI states respectively associated with two downlink signals satisfy a preset condition, receive the two downlink signals on a same time-domain resource.

In the embodiment, each of the two downlink signals may be one of the following: an SSB, a PBCH DMRS, a PTRS, a PDCCH, a PDCCH DMRS, a PDSCH, a PDSCH DMRS, or a CSI-RS.

In the embodiment, a respective one of the downlink signals associated with each of the two downlink signals may be one of the following: an SSB, a PTRS, or a CSI-RS.

As a first implementation, when the downlink signals respectively associated with the two downlink signals are both PTRSs, that the downlink signals respectively associated with the two downlink signals to be transmitted satisfy the preset condition includes that: ports of the PTRSs respectively associated with the two downlink signals are different; or, ports of the PTRSs respectively associated with the two downlink signals are the same and the two downlink signals are quasi co-located with respect to a spatial receiver parameter (i.e., a spatial Rx parameter).

As a second implementation, when the downlink signals respectively associated with the two downlink signals are both CSI-RSs, that the downlink signals respectively associated with the two downlink signals to be transmitted satisfy the preset condition includes that: CSI-RS resources for the CSI-RSs respectively associated with the two downlink signals belong to different CSI-RS resource sets; or, CSI-RS resources for the CSI-RSs respectively associated with the two downlink signals belong to the same CSI-RS resource set and the two downlink signals are quasi co-located with respect to a spatial Rx parameter; or, CSI-RS resources for the CSI-RSs respectively associated with the two downlink signals are the same.

As a third implementation, when the downlink signals respectively associated with the two downlink signals are both SSBs, that the downlink signals respectively associated with the two downlink signals to be transmitted satisfy the preset condition includes that: the SSBs respectively associated with the two downlink signals contain different cell information; or, the SSBs respectively associated with the two downlink signals contain the same cell information and indexes of the SSBs respectively associated with the two downlink signals are the same.

As a fourth implementation, when a downlink signal associated with a first downlink signal in the two downlink signals is a CSI-RS and a downlink signal associated with a second downlink signal in the two downlink signals is an SSB, that the downlink signals respectively associated with the two downlink signals to be transmitted satisfy the preset condition includes that: the CSI-RS and the SSB are quasi co-located with respect to a spatial Rx parameter.

As a fifth implementation, that the TCI states satisfy the preset condition includes that: the TCI states respectively associated with the two downlink signals belong to different TCI state groups; or, the TCI states respectively associated with the two downlink signals are the same.

The embodiments of the disclosure also provide a terminal. Based on the abovementioned embodiment, as illustrated in FIG. 5, the communication unit 31 is further configured to receive configuration information from a network device before receiving two downlink signals on a same time-domain resource, the configuration information indicating that the two downlink signals are transmitted on the same time-domain resource.

The embodiments of the disclosure also provide a terminal. Based on the abovementioned embodiments, as illustrated in FIG. 6, the terminal further includes a first processing unit 32. The first processing unit 32 is configured to, before the communication unit 31 receives the two downlink signals on a same time-domain resource, determine a respective one of downlink signals associated with each of the two downlink signals based on the TCI state associated with the downlink signal to be transmitted.

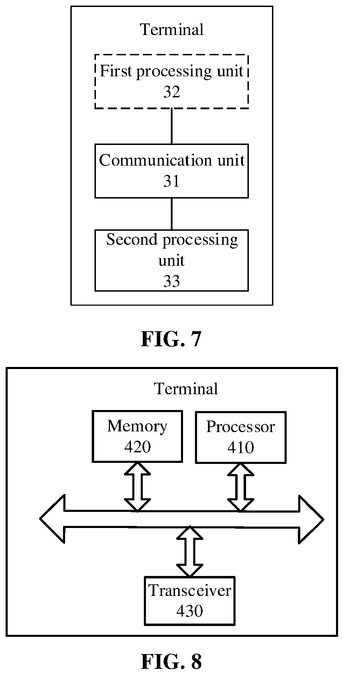

The embodiments of the disclosure also provide a terminal. Based on the abovementioned embodiments, as illustrated in FIG. 7, the terminal further includes a second processing unit 33. The second processing unit 33 is configured to, based on RRC signaling, MAC signaling or DCI, determine a respective one of the downlink signals associated with each of the two downlink signals or determine a respective one of the TCI states associated with each of the two downlink signals.

The embodiments of the disclosure also provide a terminal. Based on the abovementioned embodiment, as illustrated in FIG. 5, the communication unit 31 is further configured to send capability information to a network device before receiving the two downlink signals on the same time-domain resource. The capability information indicates that the terminal is configured with at least two panels.

It is to be noted that the terminal provided in the embodiments is described with division of each of the abovementioned program modules as an example during downlink signal transmission, and during the practical application, such processing may be allocated to different program modules for completion as required, namely an internal structure of the terminal is divided into different program modules to complete all or part of abovementioned processing. In addition, the terminal provided in the foregoing embodiments and the downlink signal transmission embodiments belong to a same concept, and details about a specific implementation process thereof refer to the method embodiment and will not be elaborated herein.

FIG. 8 is a schematic diagram of a hardware composition structure of a terminal according to an embodiment of the disclosure. As illustrated in FIG.8, the terminal includes a processor 410, and the processor 410 may call and run a computer program from a memory to perform the method in the embodiments of the disclosure.

Optionally, as illustrated in FIG. 8, the terminal may further include the memory 420. The processor 410 may call and run the computer program from the memory 420 to perform the method in the embodiments of the disclosure.

The memory 420 may be a separate device independent of the processor 410, or may be integrated into the processor 410.

Optionally, as illustrated in FIG. 8, the terminal may further include a transceiver 430. The processor 410 may control the transceiver 430 to communicate with another device, specifically sending information or data to the another device or receiving information or data from the another device.

The transceiver 430 may include a transmitter and a receiver. The transceiver 430 may further include an antenna, and a number of the antennas may be one or more.

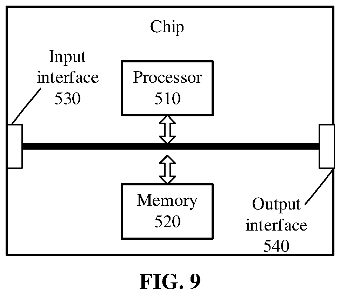

FIG. 9 is a schematic structure diagram of a chip according to an embodiment of the disclosure. As illustrated in FIG. 9, the chip includes a processor 510, and the processor 510 may call and run a computer program from a memory to perform the method in the embodiments of the disclosure.

Optionally, as illustrated in FIG. 9, the chip may further include the memory 520. The processor 510 may call and run the computer program from the memory 520 to perform the method in the embodiments of the disclosure.

The memory 520 may be a separate device independent of the processor 510, or may be integrated into the processor 510.

Optionally, the chip may further include an input interface 530. The processor 510 may control the input interface 530 to communicate with another device or chip, specifically acquiring information or data sent by the another device or chip.

Optionally, the chip may further include an output interface 540. The processor 510 may control the output interface 540 to communicate with the another device or chip, specifically outputting information or data to the another device or chip.

It is to be understood that the chip mentioned in the embodiment of the disclosure may also be called a system-level chip, a system chip, a chip system, or a system on chip, etc.

It is to be understood that the processor in the embodiment of the disclosure may be an integrated circuit chip with signal processing capacity. In an implementation process, the steps of the foregoing method embodiments may be completed by hardware integrated logical circuits in the processor or one or more instructions in a software form. The processor may be a universal processor, a digital signal processor (DSP), an application specific integrated circuit (ASIC), a field programmable gate array (FPGA) or other programmable logical devices, discrete gate or transistor logical device and discrete hardware component. The methods, steps and logical block diagrams disclosed in the embodiments of the disclosure may be implemented or executed. The universal processor may be a microprocessor or the processor may also be any conventional processor or the like. The steps of the method disclosed in combination with the embodiments of the disclosure may be directly embodied to be executed and completed by a hardware decoding processor or executed and completed by a combination of hardware and software modules in the decoding processor. The software module may be located in a mature storage medium in this field such as a random access memory (RAM), a flash memory, a read-only memory (ROM), a programmable ROM (PROM) or electrically erasable PROM (EEPROM) and a register. The storage medium is located in a memory, and the processor reads information from the memory, and completes the steps of the method in combination with hardware.

It can be understood that the memory in the embodiment of the disclosure may be a volatile memory or a nonvolatile memory, or may include both the volatile and nonvolatile memories. The nonvolatile memory may be a ROM, a PROM, an erasable PROM (EPROM), an EEPROM or a flash memory. The volatile memory may be a RAM, and is used as an external high-speed cache. It is exemplarily but unlimitedly described that RAMs in various forms may be adopted, such as a static RAM (SRAM), a dynamic RAM (DRAM), a synchronous DRAM (SDRAM), a double data rate SDRAM (DDRSDRAM), an enhanced SDRAM (ESDRAM), a synchlink DRAM (SLDRAM) and a direct rambus RAM (DR RAM). It is to be noted that the memory of a system and method described in the disclosure is intended to include, but not limited to, memories of these and any other suitable types.

It is to be understood that the memory is exemplarily but unlimitedly described. For example, the memory in the embodiments of the disclosure may also be an SRAM, a DRAM, an SDRAM, a DDR SDRAM, an ESDRAM, an SLDRAM and a DR RAM. That is, the memory in the embodiments of the disclosure is intended to include, but not limited to, memories of these and any other suitable types.

The embodiments of the disclosure also provide a computer-readable storage medium, which is configured to store a computer program.

Optionally, the computer-readable storage medium may be applied to the terminal in the embodiments of the disclosure, and the computer program enables a computer to execute corresponding flows implemented by the terminal in each method of the embodiments of the disclosure. For simplicity, elaborations are omitted herein.

The embodiments of the disclosure also provide a computer program product, which includes one or more computer program instructions.

Optionally, the computer program product may be applied to a terminal in the embodiments of the disclosure, and the computer program instructions enable the computer to execute corresponding flows implemented by the terminal in each method of the embodiments of the disclosure. For simplicity, elaborations are omitted herein.

The embodiments of the disclosure also provide a computer program.

Optionally, the computer program may be applied to a terminal in the embodiments of the disclosure, and the computer program runs in the computer to enable the computer to execute corresponding flows implemented by the terminal in each method of the embodiments of the disclosure. For simplicity, elaborations are omitted herein.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may refer to the corresponding processes in the method embodiment and will not be elaborated herein for convenient and brief description.

In some embodiments provided by the disclosure, it is to be understood that the disclosed device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of the disclosure. The abovementioned storage medium includes: various media capable of storing program codes such as a U disk, a mobile hard disk, a ROM, a RAM, a magnetic disk or an optical disk.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A method for downlink signal transmission, comprising:
when downlink signals or transmission configuration indicator (TCI) states respectively associated with two downlink signals to be transmitted satisfy a preset condition, receiving, by a terminal, the two downlink signals on a same time-domain resource.

2. The method of claim 1, further comprising:
before receiving, by the terminal, the two downlink signals on the same time-domain resource,
receiving, by the terminal, configuration information from a network device, wherein the configuration information indicates that the two downlink signals are transmitted on the same time-domain resource.

3. The method of claim 1 or 2, wherein a respective one of the downlink signals associated with each of the two downlink signals is one of the following:
a synchronization signal block (SSB);
a phase tracking reference signal (PTRS); or
a channel state information reference signal (CSI-RS).

4. The method of claim 3, wherein, when the downlink signals respectively associated with the two downlink signals are both PTRSs, the downlink signals respectively associated with the two downlink signals to be transmitted satisfy the preset condition comprises that:
ports of the PTRSs respectively associated with the two downlink signals are different; or
ports of the PTRSs respectively associated with the two downlink signals are the same and the two downlink signals are quasi co-located (QCL) with respect to a spatial receiver parameter.

5. The method of claim 3, wherein, when the downlink signals respectively associated with the two downlink signals are both CSI-RSs, the downlink signals respectively associated with the two downlink signals to be transmitted satisfy the preset condition comprises one of the following:
CSI-RS resources for the CSI-RSs respectively associated with the two downlink signals belong to different CSI-RS resource sets;
CSI-RS resources for the CSI-RSs respectively associated with the two downlink signals belong to a same CSI-RS resource set, and the two downlink signals are quasi co-located with respect to a spatial receiver parameter; or
CSI-RS resources for the CSI-RSs respectively associated with the two downlink signals are the same.

6. The method of claim 3, wherein, when the downlink signals respectively associated with the two downlink signals are both SSBs, the downlink signals respectively associated with the two downlink signals to be transmitted satisfy the preset condition comprises that:
the SSBs respectively associated with the two downlink signals contain different cell information; or
the SSBs respectively associated with the two downlink signals contain a same cell information and indexes of the SSBs respectively associated with the two downlink signals are the same.

7. The method of claim 3, wherein, when a downlink signal associated with a first downlink signal in the two downlink signals is a CSI-RS and a downlink signal associated with a second downlink signal in the two downlink signals is an SSB, the downlink signals respectively associated with the two downlink signals to be transmitted satisfy the preset condition comprises that:
the CSI-RS and the SSB are quasi co-located with respect to a spatial receiver parameter.

8. The method of claim 1, further comprising:
before receiving, by the terminal, the two downlink signals on the same time-domain resource,
determining, by the terminal, a respective one of the downlink signals associated with each of the two downlink signals based on the TCI state associated with the downlink signal to be transmitted.

9. The method of claim 1, wherein the TCI states satisfy the preset condition comprises that:
the TCI states respectively associated with the two downlink signals belong to different TCI state groups; or
the TCI states respectively associated with the two downlink signals are the same.

10. The method of claim 1, further comprising:
based on radio resource control (RRC) signaling, media access control (MAC) signaling or downlink control information (DCI), by the terminal, determining a respective one of the downlink signals associated with each of the two downlink signals or determining a respective one of the TCI states associated with each of the two downlink signals.

11. The method of claim 1, further comprising:
before receiving, by the terminal, the two downlink signals on the same time-domain resource,
sending, by the terminal, capability information to the network device, wherein the capability information indicates that the terminal is configured with at least two panels.

12. The method of any one of claims 1-11, wherein each of the two downlink signals is one of the following: an SSB, a physical broadcast channel demodulation reference signal (PBCH DMRS), a PTRS, a physical downlink control channel (PDCCH), a physical downlink control channel demodulation reference signal (PDCCH DMRS), a physical downlink shared channel (PDSCH), a physical downlink shared channel demodulation reference signal (PDSCH DMRS), or a CSI-RS.

13. A terminal, comprising:
a communication unit, configured to, when downlink signals or transmission configuration indicator (TCI) states respectively associated with two downlink signals to be transmitted satisfy a preset condition, receive the two downlink signals on a same time-domain resource.

14. The terminal of claim 13, wherein the communication unit is further configured to receive configuration information from a network device before receiving the two downlink signals on the same time-domain resource, the configuration information indicating that the two downlink signals are transmitted on the same time-domain resource.

15. The terminal of claim 13 or 14, wherein a respective one of the downlink signals associated with each of the two downlink signals is one of the following:
a synchronization signal block (SSB);
a phase tracking reference signal (PTRS); or
a channel state information reference signal (CSI-RS).

16. The terminal of claim 15, wherein, when the downlink signals respectively associated with the two downlink signals are both PTRSs, the downlink signals respectively associated with the two downlink signals to be transmitted satisfy the preset condition comprises that:
ports of the PTRSs respectively associated with the two downlink signals are different; or
ports of the PTRSs respectively associated with the two downlink signals are the same and the two downlink signals are quasi co-located (QCL) with respect to a spatial receiver parameter.

17. The terminal of claim 15, wherein, when the downlink signals respectively associated with the two downlink signals are both CSI-RSs, the downlink signals respectively associated with the two downlink signals to be transmitted satisfy the preset condition comprises one of the following:
CSI-RS resources for the CSI-RSs respectively associated with the two downlink signals belong to different CSI-RS resource sets;
CSI-RS resources for the CSI-RSs respectively associated with the two downlink signals belong to a same CSI-RS resource set, and the two downlink signals are quasi co-located with respect to a spatial receiver parameter; or
CSI-RS resources for the CSI-RSs respectively associated with the two downlink signals are the same.

18. The terminal of claim 15, wherein, when the downlink signals respectively associated with the two downlink signals are both SSBs, the downlink signals respectively associated with the two downlink signals to be transmitted satisfy the preset condition comprises that:
the SSBs respectively associated with the two downlink signals contain different cell information; or
the SSBs respectively associated with the two downlink signals contain a same cell information and indexes of the SSBs respectively associated with the two downlink signals are the same.

19. The terminal of claim 15, wherein, when a downlink signal associated with a first downlink signal in the two downlink signals is a CSI-RS and a downlink signal associated with a second downlink signal in the two downlink signals is an SSB, the downlink signals respectively associated with the two downlink signals to be transmitted satisfy the preset condition comprises that: the CSI-RS and the SSB are quasi co-located with respect to a spatial receiver parameter.

20. The terminal of claim 13, further comprising:
a first processing unit, configured to, before the communication unit receives the two downlink signals on the same time-domain resource, determine a respective one of the downlink signals associated with each of the two downlink signals based on the TCI state associated with the downlink signal to be transmitted.

21. The terminal of claim 13, wherein the TCI states satisfy the preset condition comprises that:
the TCI states respectively associated with the two downlink signals belong to different TCI state groups; or
the TCI states respectively associated with the two downlink signals are the same.

22. The terminal of claim 13, further comprising:
a second processing unit, configured to, based on radio resource control (RRC) signaling, media access control (MAC) signaling or downlink control information (DCI), determine a respective one of the downlink signals associated with each of the two downlink signals or determine a respective one of the TCI states associated with each of the two downlink signals.

23. The terminal of claim 13, wherein the communication unit is further configured to send capability information to the network device before receiving the two downlink signals on the same time-domain resource, the capability information indicating that the terminal is configured with at least two panels.

24. The terminal of any one of claims 13-23, wherein each of the two downlink signals is one of the following: an SSB, a physical broadcast channel demodulation reference signal (PBCH DMRS), a PTRS, a physical downlink control channel (PDCCH), a physical downlink control channel demodulation reference signal (PDCCH DMRS), a physical downlink shared channel (PDSCH), a physical downlink shared channel demodulation reference signal (PDSCH DMRS), or a CSI-RS.

25. A terminal, comprising:
a processor; and
a memory,
wherein the memory is configured to store a computer program, and the processor is configured to call and run the computer program stored in the memory to perform the method for downlink signal transmission of any one of claims 1-12.

26. A chip, comprising a processor, configured to call and run a computer program from a memory to enable a device installed with the chip to perform the method for downlink signal transmission of any one of claims 1-12.

27. A computer-readable storage medium, configured to store a computer program, the computer program enabling a computer to perform the method for downlink signal transmission of any one of claims 1-12.

28. A computer program, enabling a computer to perform the method for downlink signal transmission of any one of claims 1-12.
